# EUROPEAN PATENT SPECIFICATION

(11) **EP 3 477 005 B1**
(45) Date of publication and mention of the grant of the patent: **10.06.2020**
(21) Application number: 18202439.8
(22) Date of filing: 24.10.2018
(51) Int. Cl.: E02B 9/00, F03B 17/06

(54) **ENERGY EFFICIENT WATER INFRASTRUCTURE SYSTEM**
ENERGIEEFFIZIENTES WASSERINFRASTRUKTURSYSTEM
SYSTÈME D'INFRASTRUCTURE D'EAU À EFFICACITÉ ÉNERGÉTIQUE

(30) Priority: 24.10.2017 EP 17198174
(43) Date of publication of application: 01.05.2019
(73) Proprietor: Constructiewerkhuizen De Meyer, 9140 Temse (BE)
(72) Inventor: DE MEYER, Dirk, 9170 Sint-Gillis-Waas (BE)
(74) Representative: DenK iP

(56) References cited:
- EP-A1- 2 458 197
- US-A- 113 284
- US-A1- 2002 197 148

## Description

### Area of application of the invention

The present invention concerns water infrastructure systems and methods for operating water infrastructure systems, such as for example sluice systems, in an energy-efficient manner. More specifically, the present invention relates to water infrastructure systems, such as for example sluice complexes, wherein energy is generated from water force introduced into the water infrastructure system by flow, for example by sluice operation.

### Background of the invention

The idea of generating energy from water flow in water infrastructure systems, such as for example sluice complexes, is not novel. The fact that a sluice complex has energy potential is implicit. However, the most optimal way of converting the existing potential into energy must be found. At present, various projects aimed at this are in progress.

In Flanders for example, a project is in progress on the Albert Canal, in which a screw (Archimedes type) generates electricity from the water flow. This system however is only operational if there is a high volume of water (e.g. from heavy rainfall).

US-A-2002/0197148 discloses an energy-generating system according to the preamble of claim 1. This system is only suitable for harvesting kinetic energy of ocean currents and tides acting in deep waters.

There is therefore a need for a solution to the above-mentioned and other disadvantages.

### Brief summary of the invention

It is an object of embodiments of the present invention to achieve an energy-efficient water infrastructure system. It is an advantage of embodiments of the present invention that the energy system can be installed without a great impact on the operation of the water infrastructure system. The water infrastructure system may for example be a sluice system.

It is an advantage of at least some embodiments that the fixing mechanism for the frame can be installed on location within a period which is shorter than 4 hours.

It is an advantage of at least some embodiments that it is only necessary to drain the through-flow channel once to install the frame and turbine, so that normal operation of the water infrastructure complex is hindered as little as possible.

It is an advantage of at least some embodiments that no drainage is necessary for removal and installation on later maintenance or other interventions, which is advantageous since draining the through-flow channel is time-consuming and hinders the normal operation of the water infrastructure system, for example the sluice system.

It is an advantage of at least some embodiments that a high energy yield can be achieved so that in some embodiments, energy-neutrality of a water infrastructure system, for example a sluice system or sluice complex, can be achieved.

It is an advantage of embodiments of the present invention that the energy yield of the installation is guaranteed purely by the normal functioning of the water infrastructure system, for example the sluice complex, and does not depend for example on a water level from heavy rainfall.

It is an advantage of embodiments of the present invention that the frame concept allows the dimensions of an installation to be adapted to almost any possible water infrastructure system, for example any sluice system.

It is an advantage of embodiments of the present invention that the economic efficiency (yield of generated energy compared with costs of development, installation and operation) is high from integration in the water infrastructure system. It is an advantage of the integrated concept that it can be used in almost any water infrastructure system.

It is an advantage that energy can be generated by the normal water flow which is always present, for example in a sluice system by use of the sluice principle. It is an advantage that with normal sluice functioning, a turbine can be driven for around 35% of the time in order to generate energy.

It is an advantage of the present invention that a vertical shaft turbine is used, since this best conforms to the operation of some water infrastructure systems such as a sluice. It is an advantage of the present invention that an accurate transfer from the turbine to the definitive generator can be achieved so that as little energy as possible is lost.

It is an advantage of embodiments of the present invention that the normal functionality of the water infrastructure system, for example the sluice complex, is hindered as little as possible by the energy generation concept. It is an advantage of some embodiments that the installation can be manipulated easily, during installation and later maintenance, so that the normal operation of the water infrastructure system is hindered as little as possible.

The above-mentioned object is achieved by the present invention according to the independent claim. Preferred embodiments are defined in the dependent claims. The water infrastructure system may be a sluice. The water infrastructure system may also be a sewerage system, a wave action system, or another water infrastructure system in which one or another form of water flow occurs, for example by tidal flow, natural flow of rivers or water flow from height differences.

The energy-generating system may furthermore comprise one or more bearings for supporting a vertical shaft of the vertical shaft turbine.

A bearing may comprise two, three or more wheel rollers positioned around the vertical shaft for supporting the vertical shaft. The wheel rollers may be evenly distributed around the vertical shaft. There may for example be 3 wheel rollers per bearing, 4 wheel rollers per bearing, 5 wheel rollers per bearing, 6 wheel rollers per bearing etc.

At least three bearings may be provided at different positions along the vertical shaft, wherein the bearings which are not positioned at the ends of the vertical shaft have a play relative to the vertical shaft. This may allow the system to function well without inducing torsion on the shaft.

According to the invention, the turbine comprises at least 3 rotor blades. The turbine may for example comprise 3 blades. The turbine may for example comprise 4 blades. Furthermore, the energy-generating system according to the invention comprises a retraction system for retracting one or more rotor blades by moving them towards each other, the retraction system comprising one or more bending arms positioned between two rotor blades, and a drive system for opening out or bending in the bending arms so that the blades are moved apart or towards each other. The drive system may for example be a hydraulic system, or a pneumatic system or an electric system.

In a turbine with three blades, the system may be developed such that in the open state, the blades enclose an angle of around 120° between them. In a turbine with four blades, the system may be developed such that in the open state, the blades enclose an angle of around 90° between them.

The drive system may be a hydraulic cylinder so that when the hydraulic cylinder is retracted, the bending arm is extended and the blades connected via the bending arm are moved apart, and so that when the hydraulic cylinder is extended, the bending arm is retracted and the blades connected via the bending arm are positioned next to each other.

The vertical shaft turbine may be configured such that the blades, also called vanes, of the turbine are positioned to sit inside the frame.

The frame may be made from at least two parts so that the system can be transported in at least two parts, wherein the system comprises a semi-automatic coupling between the at least two parts of the frame.

The energy-generating system may furthermore comprise anchoring elements for anchoring the energy-generating system in a sluice system.

The anchoring elements may be centring pins.

The frame may provide platforms for allowing maintenance work.

The frame may comprise a number of steps for moving along the frame during maintenance work.

The present invention also provides an embodiment, which concerns a sluice system comprising an energy-generating system as described above, wherein the sluice system in normal operation allows the generation of energy.

The sluice system may furthermore comprise an energy storage system for storing energy from the energy-generating system, wherein the sluice system is configured to use the stored energy to allow operation of the sluice system.

The sluice system may be at least energy-neutral.

Particular and preferred aspects of the invention are set out in the accompanying independent and dependent claims. Features from the dependent claims may be combined with features of other dependent claims as appropriate and not merely as explicitly set out in the claims.

For purposes of summarising the invention and the advantages achieved over the prior art, certain objects and advantages of the invention have been described herein above. Of course, it is to be understood that not necessarily all such objects or advantages may be achieved according to any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the figures

The invention will now be further described, by way of example, with reference to the accompanying figures, in which:
FIG. 1 illustrates a vertical turbine which may be used in a sluice system according to an embodiment of the present invention.
   The figures are only schematic and are non-limiting. In the figures, the size of some of the elements may be exaggerated and not drawn on scale for illustrative purposes. The dimensions and the relative dimensions do not necessarily correspond to actual reductions to practice of the invention.
FIG. 2 and FIG. 3 illustrate elements of the bearing for the vertical turbine according to an embodiment of the present invention.
FIG. 4 and FIG. 5 illustrate elements of the retractable blades of the vertical turbine according to an embodiment of the present invention.
FIG. 6 illustrates a vertical turbine according to an embodiment of the present invention as may be mounted in a water infrastructure system.

Any reference signs in the claims shall not be construed as limiting the scope. In the different figures, the same reference signs refer to the same or analogous elements.

### Detailed description of the embodiments

The present invention will be described with respect to particular embodiments and with reference to certain figures but the invention is not limited thereto but only by the claims.

The vertical shaft turbine is a turbine with a vertical rotating shaft.

Where the present description refers to a vertical shaft turbine and a generator which are operationally connected, reference is made to a turbine with a vertical shaft which is connected to a generator in such a fashion that movement of the turbine results in generation of energy in the generator.

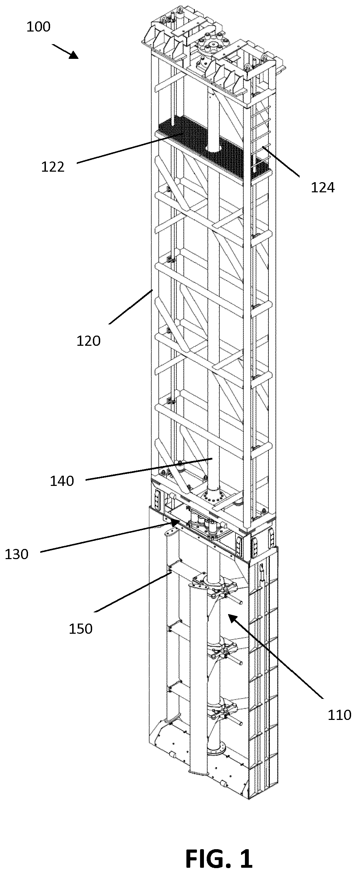

As an example, further features and advantages are described with reference to FIG. 1 and with reference to further possible embodiments. FIG. 1 shows an energy-generating system 100 which uses a vertical shaft turbine 110.

The turbine used is a vertical shaft turbine 110. The turbine 110 may therefore fit in a shaft. In preferred embodiments, the turbine 110 is adapted such that the position and the fixing of the vanes 150 of the turbine 110 are selected such that the turbine 110 can be lifted through the shaft without the vanes 150 seizing in the shaft.

The system 100 also comprises a frame 120 in which the turbine 110 is integrated. The frame 110 is advantageously a two-part frame so as to keep the whole assembly transportable, in view of the size of the components. The bottom part comprises the turbine 110 and is coupled to the top part via a locking system. The frame 120 can be rapidly removed if there is risk of damage due to the water infrastructure system 200 not being operational, such as for example due to blockage of the sluice traffic. In some embodiments, the frame 120 is adapted to allow semi-automatic unlocking of the two parts of the frame 120. The system 100 is preferably constructed such that critical elements which must be unlocked manually are accessible, at least at low water. In specific embodiments, the top part of the frame 120 comprises a number of platforms 122. These can be made accessible using fixed ladders 124.

In dimensioning the clamping system, it is preferably taken into account that the concrete walls have a very rough finish and that the dimensions of the shaft may vary over the height. The frame 120 is centred on the concrete floor of the sewer via centring pins which are anchored in the concrete. The system need only be drained once for the concrete work. During this drainage, advantageously a 3D laser survey may be carried out to map the actual contours of the concrete structure.

In some embodiments, the turbine and parts of the frame 120 are welded.

In some embodiments, the constructions are provided with a surface finish. In some embodiments, the constructions may be blasted, metallised and/or painted.

In some embodiments, one or more bearings 130 may be provided which typically form support bearings for the central shaft 140 of the water turbine 110. Preferably, several bearings 130 are provided which support the shaft at different positions along the length of the vertical shaft 140. The vertical shaft 140 of the water turbine 110 is mounted by means of the one or more bearings 130.

In a specific embodiment, the bearing 130 comprises wheel rollers 132 positioned around the central shaft 140. For example, 4 wheel rollers 132 may be positioned, for example one per quadrant around the central shaft 140. In an alternative embodiment, 3 wheel rollers 132 may be provided, which are for example each positioned in a sector of 120° around the shaft. In some embodiments, 2 mounted wheels 134 which support the central shaft 140 may be provided per wheel roller. Each wheel roller 132 may preferably be mounted separately relative to the bearing housing, so that the bearing is self-adjusting. The bearings 130 may preferably serve to absorb bending forces of the turbine 110. In some embodiments, the central shaft 140 may be supported at 3 or more points along the shaft 140. To avoid friction stresses, preferably play is provided at the bearings 130, more specifically at the bearings which are not situated closest to the ends of the vertical shaft 140. The system 100 may be adapted for adjusting the play at the bearing by means of a control system 170. The wheel rollers 132 may for example be adjustable relative to the bearing housing, for example by means of adjusting screws, so that the play can be determined.

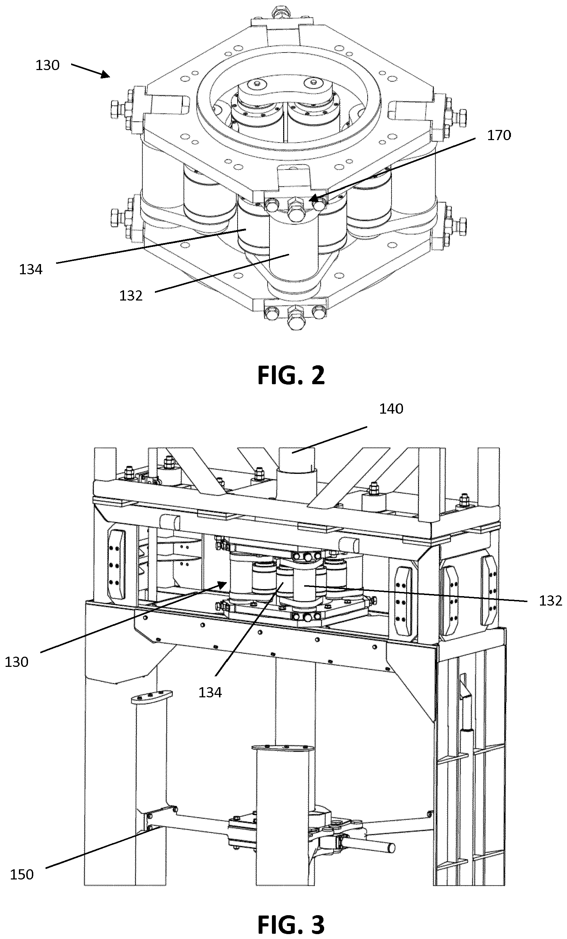

By way of illustration, FIG. 2 shows an example of a support bearing and FIG. 3 shows an example of a vertical shaft 140 supported by a support bearing. In the example shown, the support bearing comprises 4 wheel rollers 132.

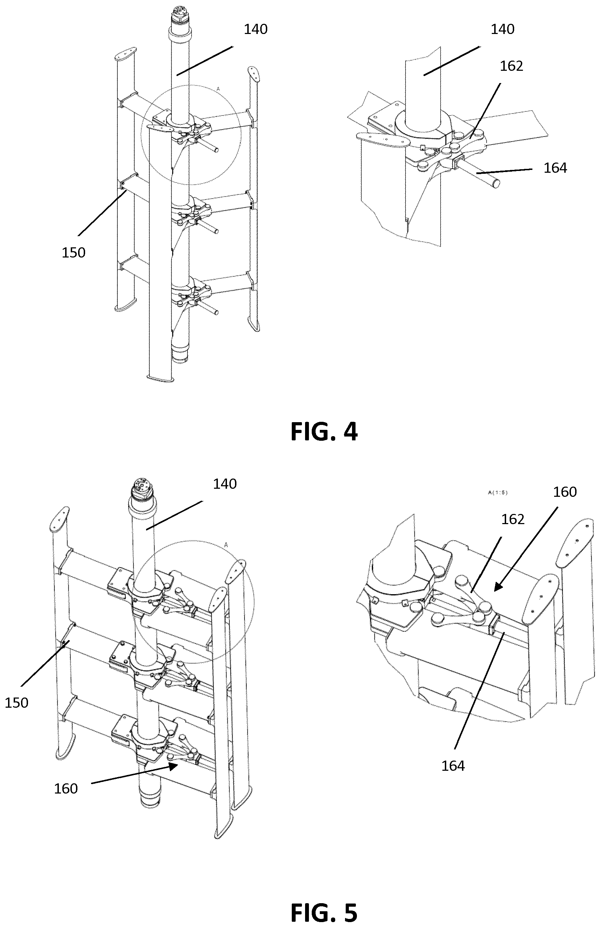

In some embodiments, the system comprises extendable blades. The turbine 110 is typically always inside a steel frame 120 and is installed in its location via a narrow shaft. Because it is advantageous to have more than two blades 150 in the turbine, but these take up a great deal of space so that installation via a narrow shaft is difficult, the invention comprises retractable blades so that these lie substantially in the length of each other and this results in simpler installation. The system therefore comprises a retraction system 160 so that two or more blades 150 can be folded together, for example two on two or three on three. In this way, it is possible that the turbine 110 can pass through the narrow shaft. Once the turbine 110 is in place, using the retraction system, the blades can be extended to give a 3-blade turbine, a 4-blade turbine, a 5-blade turbine or a 6-blade turbine. For example, a 3-blade turbine may be achieved with each blade at 120°. In one embodiment, the system may comprise a retraction system 160 which consists of hydraulic cylinders 164, or electric actuation or pneumatic actuation which drives the bending arms 162. Alternatively, the blades may also be driven directly. By way of illustration, the example of actuation with hydraulic cylinders is discussed in more detail. When the hydraulic cylinder is retracted, the bending arms lie in the length of each other, and in the open position, the rotor blades stand at around 120° from each other. The principle is depicted in FIG. 4 and FIG. 5, wherein FIG. 4 shows the situation for the extended blades while FIG. 5 shows the situation for the retracted blades 150.

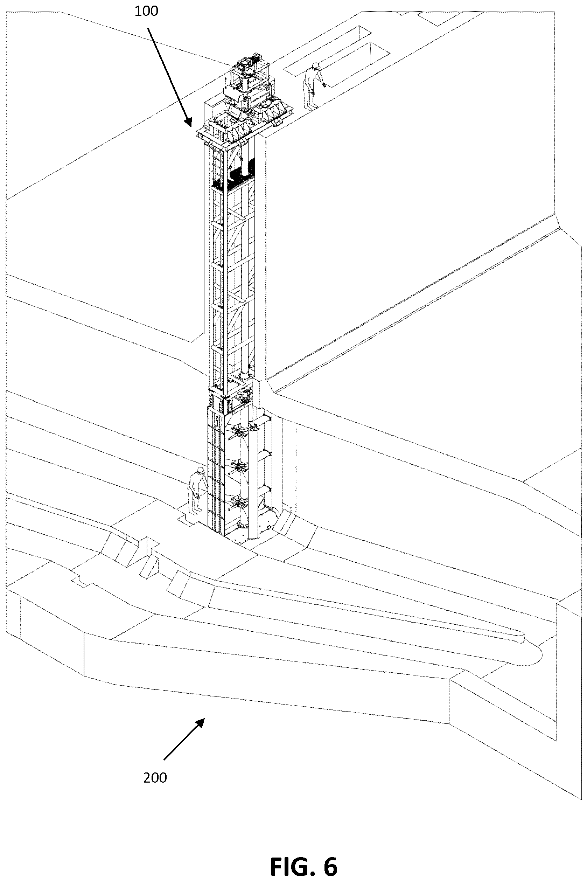

FIG. 6 finally shows an example of the turbine 110 mounted in a water infrastructure system 200, such as for example a sewerage system.

An embodiment of the present invention concerns a water infrastructure system comprising an energy-generating system as described above, wherein the water infrastructure system in normal operation allows the generation of energy. The water infrastructure system, for example the sluice system, may also comprise an energy storage system for storing energy from the energy-generating system. The water infrastructure system may be configured to use the stored energy for allowing the operation of the water infrastructure system. The water infrastructure system, for example the sluice system, may be at least energy-neutral.

## Claims

1. Energy-generating system (100) for use in a water infrastructure system (200), the energy-generating system (100) comprising:
- a vertical shaft turbine (110) and a generator operationally connected to the vertical shaft turbine (110),
- a frame (120) for supporting the generator and the vertical shaft turbine (110), wherein the frame is adapted to be positioned relative to the water infrastructure system (200) such that the vertical shaft turbine (110) can generate power by water force induced in the water infrastructure system (200),
**characterised in that**
the turbine comprises at least three rotor blades (150), and
a retraction system (160) for retracting one or more rotor blades (150) by moving them towards each other, the retraction system comprising one or more bending arms (162) positioned between two rotor blades (150) and a drive system (164) for opening out or bending in the bending arms (162) so that the rotor blades (150) are moved apart or towards each other.

2. Energy-generating system (100) according to claim 1, wherein the energy-generating system (100) furthermore comprises one or more bearings (130) for supporting a vertical shaft (140) of the vertical shaft turbine (110).

3. Energy-generating system (100) according to claim 2, wherein a bearing (130) comprises two, three or more wheel rollers (132) positioned around the vertical shaft (140) for supporting the vertical shaft (140).

4. Energy-generating system (100) according to claim 3, wherein the wheel rollers (132) each comprise two cylindrical mounted wheels (134) per wheel roller (132).

5. Energy-generating system (100) according to any of claims 3 and 4, wherein at least three bearings (130) are provided at different positions along the vertical shaft (140), and wherein at least one of the bearings (130) which is not positioned at the ends of the vertical shaft (140) provides play between the wheel rollers (132) and the vertical shaft (140).

6. Energy-generating system (100) according to claim 5, wherein the at least one of the bearings (130) which is not positioned at the end of the vertical shaft comprises a control system (170) for adjusting the play between the wheel rollers (132) and the vertical shaft (140).

7. Energy-generating system (100) according to claim 1, wherein the drive system (164) is a hydraulic cylinder so that when the hydraulic cylinder is retracted, the bending arm (162) is extended and the rotor blades (150) connected via the bending arm are moved apart, and so that when the hydraulic cylinder is extended, the bending arm (162) is retracted and the rotor blades (150) connected via the bending arm are positioned next to each other.

8. Energy-generating system (100) according to any of the preceding claims, wherein the vertical shaft turbine (110) is configured such that the vanes of the turbine in retracted state are positioned to sit inside the frame (120).

9. Energy-generating system (100) according to any of the preceding claims, wherein the frame (120) is made from at least two parts so that the system can be transported in at least two parts, and wherein the system comprises a semi-automatic coupling between the at least two parts of the frame (120).

10. Energy-generating system (100) according to any of the preceding claims, wherein the energy-generating system (100) furthermore comprises anchoring elements for anchoring the energy-generating system (100) in the water infrastructure system, and/or wherein the frame (120) provides platforms (122) and/or steps (124) to facilitate maintenance work by increasing the accessibility.

11. Water infrastructure system (200) comprising an energy-generating system (100) according to claims 1 to 10, wherein the water infrastructure system (200) in normal operation allows the generation of energy.

12. Water infrastructure system (200) according to claim 11, wherein the water infrastructure system (200) furthermore comprises an energy storage system for storing energy from the energy-generating system, and wherein the water infrastructure system (200) is configured to use the stored energy to allow operation of the water infrastructure system (200), and/or wherein the water infrastructure system (200) is a sluice system.

13. Water infrastructure system (200) according to any of claims 11 to 12, wherein the water infrastructure system (200) is at least energy-neutral.

## Patentansprüche

1. Energieerzeugungssystem (100) zur Verwendung in einem Wasserinfrastruktursystem (200),
wobei das Energieerzeugungssystem (100) umfasst:
- eine Turbine mit vertikaler Welle (110) und einen Generator, der mit der Turbine mit vertikaler Welle (110) wirkverbunden ist,
- einen Rahmen (120) zum Tragen des Generators und der Turbine mit vertikaler Welle (110), wobei der Rahmen so angepasst ist, dass er relativ zum Wasserinfrastruktursystem (200) so positioniert werden kann, dass die Turbine mit vertikaler Welle (110) Energie durch die im Wasserinfrastruktursystem (200) induzierte Wasserkraft erzeugen kann, **dadurch gekennzeichnet, dass**
die Turbine mindestens drei Rotorblätter (150) umfasst, und
ein Einfahrsystem (160) zum Einfahren eines oder mehrerer Rotorblätter (150), indem sie aufeinander zu bewegt werden, wobei das Einfahrsystem einen oder mehrere Biegearme (162), die zwischen zwei Rotorblättern (150) angeordnet sind, und ein Antriebssystem (164) zum Öffnen oder Einbiegen der Biegearme (162) umfasst, so dass die Rotorblätter (150) auseinander oder aufeinander zu bewegt werden.

2. Energieerzeugungssystem nach Anspruch 1, wobei das Energieerzeugungssystem (100) weiter ein oder mehrere Lager (130) zum Tragen einer vertikalen Welle (140) der Turbine (110) mit vertikaler Welle umfasst.

3. Energieerzeugungssystem nach Anspruch 2, wobei ein Lager (130) zwei, drei oder mehr Radrollen (132) umfasst, die um die vertikale Welle (140) herum angeordnet sind, um die vertikale Welle (140) zu tragen.

4. Energieerzeugungssystem nach Anspruch 3, wobei die Radwalzen (132) jeweils zwei zylindrisch gelagerte Räder (134) pro Radrolle (132) umfassen.

5. Energieerzeugungssystem (100) nach einem der Ansprüche 3 und 4, wobei mindestens drei Lager (130) an verschiedenen Positionen entlang der vertikalen Welle (140) bereitgestellt sind, und wobei mindestens eines der Lager (130), das nicht an den Enden der vertikalen Welle (140) positioniert ist, Spiel zwischen den Radrollen (132) und der vertikalen Welle (140) liefert.

6. Energieerzeugungssystem nach Anspruch 5, wobei das mindestens eine der Lager (130), das nicht am Ende der vertikalen Welle positioniert ist, ein Steuersystem (170) zur Einstellung des Spiels zwischen den Radrollen (132) und der vertikalen Welle (140) umfasst.

7. Energieerzeugungssystem nach Anspruch 1, wobei das Antriebssystem (164) ein Hydraulikzylinder ist, so dass beim Einfahren des Hydraulikzylinders der Biegearm (162) ausgefahren wird und die über den Biegearm verbundenen Rotorblätter (150) auseinander bewegt werden, und so, dass beim Ausfahren des Hydraulikzylinders der Biegearm (162) eingefahren wird und die über den Biegearm verbundenen Rotorblätter (150) nebeneinander positioniert werden.

8. Energieerzeugungssystem (100) nach einem der vorstehenden Ansprüche, wobei die Turbine mit vertikaler Welle (110) so konfiguriert ist, dass die Schaufeln der Turbine im eingefahrenen Zustand so positioniert sind, dass sie innerhalb des Rahmens (120) sitzen.

9. Energieerzeugungssystem (100) nach einem der vorstehenden Ansprüche, wobei der Rahmen (120) aus mindestens zwei Teilen hergestellt ist, so dass das System in mindestens zwei Teilen transportiert werden kann, und wobei das System eine halbautomatische Kupplung zwischen den mindestens zwei Teilen des Rahmens (120) umfasst.

10. Energieerzeugungssystem (100) nach einem der vorstehenden Ansprüche, wobei das Energieerzeugungssystem (100) weiter Verankerungselemente zur Verankerung des Energieerzeugungssystems (100) im Wasserinfrastruktursystem umfasst, und/oder wobei der Rahmen (120) Plattformen (122) und/oder Stufen (124) zur Erleichterung von Wartungsarbeiten durch Erhöhung der Zugänglichkeit vorsieht.

11. Wasserinfrastruktursystem (200) umfassend ein Energieerzeugungssystem (100) nach den Ansprüchen 1 bis 10, wobei das Wasserinfrastruktursystem (200) im Normalbetrieb die Erzeugung von Energie erlaubt.

12. Wasserinfrastruktursystem (200) nach Anspruch 11, wobei das Wasserinfrastruktursystem (200) weiter ein Energiespeichersystem zum Speichern von Energie aus dem Energieerzeugungssystem umfasst, und wobei das Wasserinfrastruktursystem (200) so konfiguriert ist, dass es die gespeicherte Energie nutzt, um den Betrieb des Wasserinfrastruktursystems (200) zu erlauben, und/oder wobei das Wasserinfrastruktursystem (200) ein Schleusensystem ist.

13. Wasserinfrastruktursystem (200) nach einem der Ansprüche 11 bis 12, wobei das Wasserinfrastruktursystem (200) mindestens energieneutral ist.

## Revendications

1. Système générateur d'énergie (100) pour une utilisation dans un système d'infrastructure à eau (200), le système générateur d'énergie (100) comprenant :
- une turbine à arbre vertical (110) et un générateur raccordé en fonctionnement à la turbine à arbre vertical (110),
- un cadre (120) pour supporter le générateur et la turbine à arbre vertical (110), dans lequel le cadre est adapté pour être positionné par rapport au système d'infrastructure à eau (200) de sorte que la turbine à arbre vertical (110) puisse générer de la puissance par l'intermédiaire de la force de l'eau induite dans le système d'infrastructure à eau (200),
**caractérisé en ce que**
la turbine comprend au moins trois pales de rotor (150), et
un système de rentrée (160) pour rentrer une ou plusieurs pales de rotor (150) en les déplaçant les unes vers les autres, le système de rentrée comprenant un ou plusieurs bras pliants (162) positionnés entre deux pales de rotor (150) et un système d'entraînement (164) pour l'ouverture
ou le pliage des bras pliants (162) de sorte que les pales de rotor (150) soient écartées ou déplacées les unes vers les autres.

2. Système générateur d'énergie (100) selon la revendication 1, dans lequel le système générateur d'énergie (100) comprend par ailleurs un ou plusieurs paliers (130) pour supporter un arbre vertical (140) de la turbine à arbre vertical (110).

3. Système générateur d'énergie (100) selon la revendication 2, dans lequel un palier (130) comprend deux, trois ou plus de rouleaux pour roues (132) positionnés autour de l'arbre vertical (140) pour supporter l'arbre vertical (140).

4. Système générateur d'énergie (100) selon la revendication 3, dans lequel les rouleaux pour roues (132) comprennent chacun deux roues montées de manière cylindrique (134) par rouleau pour roues (132).

5. Système générateur d'énergie (100) selon l'une quelconque des revendications 3 et 4, dans lequel au moins trois paliers (130) sont fournis à différentes positions le long de l'arbre vertical (140), et dans lequel au moins un des paliers (130) qui n'est pas positionné aux extrémités de l'arbre vertical (140) fournit du jeu entre les rouleaux pour roues (132) et l'arbre vertical (140) .

6. Système générateur d'énergie (100) selon la revendication 5, dans lequel le au moins un des paliers (130) qui n'est pas positionné à l'extrémité de l'arbre vertical comprend un système de commande (170) pour ajuster le jeu entre les rouleaux pour roues (132) et l'arbre vertical (140).

7. Système générateur d'énergie (100) selon la revendication 1, dans lequel le système d'entraînement (164) est un cylindre hydraulique de sorte que lorsque le cylindre hydraulique est rentré, le bras pliant (162) est étendu et les pales de rotor (150) reliées via le bras pliant sont écartées, et de sorte que lorsque le cylindre hydraulique est étendu, le bras pliant (162) est rentré et les pales de rotor (150) reliées via le bras pliant sont positionnées les unes à côté des autres.

8. Système générateur d'énergie (100) selon l'une quelconque des revendications précédentes, dans lequel la turbine à arbre vertical (110) est configurée de sorte que les vannes de la turbine à l'état rentré sont positionnées de façon à se tenir à l'intérieur du cadre (120).

9. Système générateur d'énergie (100) selon l'une quelconque des revendications précédentes, dans lequel le cadre (120) est fabriqué à partir d'au moins deux parties de sorte que le système peut être transporté en au moins deux parties, et dans lequel le système comprend un couplage semi-automatique entre les au moins deux parties du cadre (120).

10. Système générateur d'énergie (100) selon l'une quelconque des revendications précédentes, dans lequel le système générateur d'énergie (100) comprend par ailleurs des éléments d'ancrage pour ancrer le système générateur d'énergie (100) dans le système d'infrastructure à eau, et/ou dans lequel le cadre (120) fournit des plateformes (122) et/ou des marches (124) pour faciliter le travail de maintenance en augmentant l'accessibilité.

11. Système d'infrastructure à eau (200) comprenant un système générateur d'énergie (100) selon les revendications 1 à 10, dans lequel le système d'infrastructure à eau (200) en fonctionnement normal permet la génération d'énergie.

12. Système d'infrastructure à eau (200) selon la revendication 11, dans lequel le système d'infrastructure à eau (200) comprend par ailleurs un système de stockage d'énergie pour stocker l'énergie en provenance du système générateur d'énergie, et dans lequel le système d'infrastructure à eau (200) est configuré pour utiliser l'énergie stockée pour permettre le fonctionnement du système d'infrastructure à eau (200), et/ou dans lequel le système d'infrastructure à eau (200) est un système de sas.

13. Système d'infrastructure à eau (200) selon l'une quelconque des revendications 11 à 12, dans lequel le système d'infrastructure à eau (200) est au moins neutre sur le plan énergétique.
